## Europäisches Patentamt
## European Patent Office
## Office européen des brevets

(19)

(11) Veröffentlichungsnummer: **0 072 367**
**B1**

(12) # EUROPÄISCHE PATENTSCHRIFT

(45) Veröffentlichungstag der Patentschrift:
**17.12.86**

(51) Int. Cl.⁴: **G 01 B 15/02**

(21) Anmeldenummer: **82890113.2**

(22) Anmeldetag: **04.08.82**

(54) Verfahren zur Messung der Beschichtungsdicke von ummantelten Drähten oder Rohren.

(30) Priorität: **04.08.81 AT 3435/81**

(43) Veröffentlichungstag der Anmeldung:
**16.02.83 Patentblatt 83/7**

(45) Bekanntmachung des Hinweises auf die Patenterteilung:
**17.12.86 Patentblatt 86/51**

(84) Benannte Vertragsstaaten:
**AT BE CH DE FR GB LI NL**

(56) Entgegenhaltungen:
**DE-A-2 121 601**
**DE-A-2 311 623**
**DE-A-2 549 735**
**DE-B-2 611 411**
**DE-U-1 818 231**
**US-A-4 129 778**

(73) Patentinhaber: **Österreichisches Forschungszentrum Seibersdorf Ges.m.b.H., A-2444 Seibersdorf (AT)**

(72) Erfinder: **Frevert, Erich, Dr., Donaustrasse 87/10, A-2344 Maria Enzersdorf (AT)**

## Beschreibung

Die Erfindung betrifft ein Verfahren zur berührungslosen Messung der Beschichtungsdicke von beschichteten Drähten oder Rohren mit unbekanntem Kerndurchmesser mittels einer Rückstreu- bzw. Röntgenfluoreszenzanalyse, wobei zumindest an einer Meßstelle die rückgestreute bzw. in dem beschichteten Dreht bzw. Rohr induzierte Strahlung gemessen wird.

Zum schutz von Korrosion, Oxydation oder anderen Abnützungserscheinungen oder zu Zwecken der Isolierung werden Drähte oder Rohre sehr oft mit einer Schicht aus einem anderen Material beschichtet. Die Schichtdicke unterliegt dabei in vielen Fällen einer vorgeschriebenen Norm. Bei der Herstellung dieser Drähte bzw. Rohre muß also darauf geachtet werden, daß die vorgeschriebenen Schichtdicken innerhalb der Toleranzgrenze eingehalten werden. Dazu benötigt man Geräte oder Methoden, die Schichten mit der erforderlichen Genauigkeit auszumessen.

Das Problem soll an Hand eines Beispiels näher erläutert werden. Bei aluminiumummantelten Stahldrähten (Stalum) muß laut ONORM E4031 die Schichtdicke des Aluminiummantels mindestens 5 % des Drahtdurchmessers betragen. Die derzeit üblicherweise praktizierte Uberprüfung der Drähte oder Rohre geschieht folgendermaßen: von dem Draht wird ein Stück abgeschnitten, in Kunstharz eingebettet, und dieses ausgehärtet. Danach wird ein Schliff hergestellt und die Schichtdicke mikroskopisch ausgemessen. Insgesamt ein umständliches, zeitaufwendiges und nicht sehr genaues Verfahren, welches insbesondere kaum für eine routinemäßige prozenkontrolle keinesfalls jedoch für eine Prozeßsteuerung, geeignet ist.

Eine in der DE-U 1 818 231 beschriebene Einrichtung zur selbsttätigen Untersuchung von Rohren, elektrischen Kabeln, umhüllten Schweißelektroden u.dgl. auf gleichmäßige Wand- bzw. Umhüllungsdicke mittels radioaktiver Isotope, wobei vier im Kreis um den, in einer Zentrierbuchse geführten und von angetriebenen Keilnutrollenpaaren durch die Einrichtung geschobenen Prüfling angeordnete radioaktive Isotope von gleicher Strahlungsintensität vorgesehen sind und jeweils zwei Isotopenpaare gegeneinander um 90° versetzt sind, deren Strahlungen nach tangentialem Durchgang durch die Wand bzw. Umhüllung des Prüflings von den Isotopen gegenüberliegenden Meßempfängern aufgenommen werden, von denen jeweils zwei auf eine Meßbrücke geschaltet sind, deren Ausgänge an einem Monitor liegen, so daß dieser bei unterschiedlicher Intensitätsaufnahme ein akustisches oder optisches Signal auslöst bzw. eine Auswurfvorrichtung in Tätigkeit setzt, ist für die genannten Zwecke unbrauchbar.

Es sind auch Verfahren bekannt, welche eine berührungslose Messung von Schichtdicken von Drähten oder Rohren gestattet. So sind Durchstrahlungsverfahren bekannt, bei welchen mittels Röntgen- bzw. radioaktiver Strahlung anhand der unterschiedlichen Abschwächung der Strahlung in den Schichten und Kernmaterialien die Beschichtungsdicke von beschichteten Drähten oder Rohren ermittelt werden. So wird z.B. in der DE-A-2 634 183 ein Verfahren beschrieben, bei welchem der zu überprüfende beschichtete Draht mittels Röntgenstrahlen auf einem Röntgenschirm abgebildet wird und aus den Helligkeitsunterschieden mittels Photosensoren und einer Auswerteelektronik sowohl die Schichtdicke als auch die Durchmesser der beschichteten Drähte ermittelt werden. In der DE-C- 2 122 738 wird ein Verfahren beschrieben, bei welchem der Draht senkrecht zu seiner Längsachse durch ein fokussiertes Röntgenstrahlenbündel bewegt und die durch den beschichteten Draht unterschiedlich abgeschwächte Intensität der Röntgenstrahlung mittels eines Strahlungsdetektors registriert und aus den so erhaltenen Meßkurven die Beschichtungsdicke und der Drahtdurchmesser, insbesondere mit einer Auswertelogik, ermittelt wird. Der apparative Aufwand bei diesem Verfahren, insbesondere zur Ermittelung der Beschichtung dünner Proben, ist sehr aufwendig und deren Anwendung daher nur auf Sonderfälle begrenzt.

Aus der selben DE-C-2 122 738 ist eine Methode bekannt, die Exzentrizität von umhüllten metallischen Stäben mittels der Röntgenstrahlenabsorption zu messen. Eine Bestimmung der absoluten Schichtdicke erfolgt nicht und bei der Exzentrizität wird lediglich der statistische Mittelwert einer vorgebbaren Anzahl von Stäben berechnet.

Es sind ferner Verfahren bekannt, bei welchen die Beschichtungsdicke mittels der Rückstreuung radioaktiver Strahlung (Rückstreumethode) oder der Anregung der charakteristischen Röntgenstrahlung der Beschichtung bzw. des Kernmaterials durch radioaktive Strahlen (Röntgenfluoreszenzmethode) gemessen wird (z.B. VDI Bd.95/7 Seite 207 bis 210). Auch aus der DE-A- 2121 601 ist ein Verfahren zum berührungslosen Messen von Schichtdicken bekannt, bei dem die zu messende Schicht und deren Träger radioaktiv bestrahlt werden und die Intensität der Rückstrahlung gemessen wird, wobei das Material der Schicht und/oder das des Trägers zu Fluoreszenzstrahlung angeregt werden und die Intensität mindestens einer Fluoreszenzstrahlung gemessen wird.

Aus der US-A- 4 129 775 ist ein Verfahren zur Dickenmessung einer Überzugsschicht mit Messungen der von dem Grundmaterial und von einer darauf befindlichen Schicht ausgehenden Fluoreszenzstrahlung bekannt. In einem Algorithmus, der ausschließlich für zwei auf einem ebenen Grundkörper bef indliche Schichten anwendbar ist, erfolgt die Verknüpfung der Meßwerte ohne ein Iterationsverfahren mit einem tatsächlich gemessenen Gesamtdurchmesser der Probe als Ausgangswert zu verwenden.

Aus der DE-A-2 549 735 ist eine Einrichtung bzw. Methode zur Bestimmung von dünnen Fremdschichten auf Stoffen mit Hilfe von Röntgenfluoreszenzstrahlung bekannt, wobei die zu untersuchende Oberfläche mit Röntgenstrahlen beatrahlt und die erzeugte Fluoreszenzstrahlung energiedisperaiv gemessen wird und sodann die Verhältnisse der Intensitäten von Kund L-Strahlung der angeregten Elemente gebildet werden, aus deren Größe die Fremdachichtdicken und Belagdicken ermittelt werden. Dazu wird eine Strahlenquelle, insbesondere ein radioaktiver Strahler oder eine Elektronen-Röntgenquelle, eine Probenhalterung und ein energiedispersiver Detektor verwendet, die in einem evakuierbaren Gefäß eingebaut sind, mit angeschlossenem Energiediskriminator und Rechner.

Aus der DE-B- 2 611 411 ist eine Vorrichtung zum Messen der Dicke von Schichten nach dem Beta-Strahlen-Rückstreuverfahren bekannt, mit einem die Schicht bestrahlenden Radionuklid, das eine der Dicke der Schicht in ihrer Energie entsprechende Strahlung erzeugt, mit einem Detektor, der die aus der Schicht und gegebenenfalls vorhandenen Trägermaterial zurückgestreute Rückstreustrahlung als Zänlung aufnimmt und an seinem Ausgang eine Impulsrate erzeugt, und zwar im Bereich zwischen einer unteren, zur Schichtdicke Null gehörenden Rückstreuung entsprechenden ersten Zänlung und einer oberen Zählung, die zum Bereich einer quasi unendlich dicken Schicht gehört, und mit einem digitalen Rechner, der die normierte Zänlung gemäß einer vorgegebenen Formel ermittelt. In ähnlicher Weise ist aus der DE-A- 2 311 823 eine Vorrichtung zum Messen der Dicke von Schichten bekannt, mit einem die Schicht bestrahlenden Radionuklid, das eine der Dicke der Schicht in ihrer Energie entsprechende Strahlung erzeugt, mit einem Detektor, der die aus der Schicht und einem gegebenenfalls vorhandenen Trägermaterial zurückgestreute Rückstreustrahlung aufnimmt und an seinem Ausgang eine Impulsrate erzeugt, und zwar im Bereich zwischen einer unteren, zur Schichtdicke Null gehörenden Rückstreuung entsprechenden ersten Zänlung und einer oberen Zählung, die zum Bereich einer quasi unendlich dicken Schicht gehört, mit einer den nichtlinearen Zusammenhang von Zählrate und Schichtdicke rechnerisch berücksichtigenden Schaltung und einer nachgeschalteten Anzeigevorrichtung, wobei in einem Rechner gemäß einer vorbestimmten Formel die Schichtdicke ermittelt wird.

Diese Verfahren sind auf die Bestimmung der Beschichtungsdicke ebener Proben begrenzt da diese Methode neben der starken Abhängigkeit der Rückstrahlungsintensität von der Meßgeometrie (z.B. Meßkopf-Probenabstand, Anordnung des Detektors zu der oder den Strahlenquellen) auch eine starke Abhängigkeit von der Probengeometrie selbst aufweisen. So werden z.B. in der DE-B- 2 611 411 und DE-A- 2 311 623 Vorrichtungen beschrieben, mittels derer nach Rückstreumethoden die Beschichtungsdicke ebener Proben bestimt wird. Aus den in diesen Druckschriften angegebenen Formeln für die Bestimmung der Schichtdicke aus der Intensität der rückgestreuten Strahlung ist ersichtlich, daß diese Bestimmungsmethoden nur bei ebenen Proben anwendbar sind. Eine derartige Methode wäre auch dann anwendbar, wenn die geometrischen Daten des Kerns des beschichteten Drahtes bzw. Rohres konstant und bekannt wären. Bei beschichteten Drähten oder Rohren wie sie beim Ziehen von beschichteten Rohlingen entstehen variieren jedoch die Kerndurchmesser, so daß die bekannten Verfahren nicht angewendet werden können.

Hinzu kommt, daß bei den bereits bekannten Rückstreumeßverfahren das Basismaterial für die verwendete Strahlung unendlich dick sein muß (Sättigungsrückstreuung), so daß der von dem Basismaterial selbst zurückgestreute Strahlungsanteil bei sonst gleichbleibender Meßgeometrie konstant ist, und die Veränderungen der Strahlungsintensität nur durch Änderungen der Dicke der Auflageschicht bewirkt werden. Bei dünnen beschichteten Drähten oder Rohren dagegen ist die Intensität der rückgestreuten Strahlung nicht nur von der Beschichtungsdicke, sondern auch von dem in den meisten Fällen unbekannten Durchmesser des Draht- bzw. Rohrkernes abhängig. Eine vom Draht- bzw. Rohrkerndurchmesser abhängige Kalibrierung einer Rückstreumeßanlage für beschichtete Drähte oder Rohre, die selbstverständlich mit Standarddrähten- bzw. Rohren mit bekannten Kern- und Beschichtungsdimensionen durchführbar ist, führt also alleine nicht zum Ziel. Versuche, durch starke Kollimierung des Strahlenbündels vom Drahtdurchmesser unabhängig zu werden, führten bei Drähten zu keinem brauchbaren Ergebnis. Aufgabe der Erfindung ist die Bereitstellung eines Verfahrens, mit dem in einfacher und schneller Art eine genaue Bestimmung der Beschichtungsdicke von beschichteten Drähten oder Rohren mit unbekanntem Kerndurchmesser berührungslos durchgeführt werden kann. Diese Aufgabe wird bei einem Verfshren der eingangs genannten Art erfindungsgemäß dadurch gelöst, daß für den Bereich der zu untersuchenden Draht- bzw. Rohrdicken und Beschichtungsdicken sowie für die jeweils eingesetzten Materialien mit unbeschichteten Drähten bzw. Rohren bekannten Durchmessers eine erste Verknüpfungsregel zwischen der gemessenen Strahlungsintensität und dem Durchmesser der unbeschichteten Drähte bzw. Rohre ermittelt wird,

daß für diesen Bereich mit beschichteten Drähten bzw. Rohren unterschiedlicher und bekannter Beschichtungsdicken und bekannter Kerndurchmesser eine zweite Verknüpfungsregel zwischen dem Verhältnis der an beschichteten und der an unbeschichteten Drähten bzw. Rohren gemessenen Strahlungsintensitäten und der bekannten Beschichtungsdicke ermittelt wird, daß für jede Meßstelle der Außendurchmesser des hinsichtlich seiner Beschichtungsdicke zu untersuchenden Drahtes bzw. Rohres mittels einer mechanischen, optischen oder strahlungsmeßtechnischen Meßmethode gemessen wird,

daß mittels der ersten Verknüpfungsregel durch Einsetzen des gemessenen Außendurchmeasers als ersten Näherungswert für den unbekannten Innendurchmesser ein erster Näherungswert für den theoretischen Meßwert für die Strahlungsintensität des unbeschichteten Drahtes bzw. Rohres ermittelt wird,

daß ferner das Verhältnis zwischen dem tatsächlich an der Probe gemessenen Wert der Strahlungsintensität und dem gemäß der ersten Verknüpfungsregel ermittelten theoretischen Meßwert ermittelt wird und mit diesem Verhältnis mittels der zweiten Verknüpfungsregel ein erster Näherungswert für die zu bestimmende Beschichtungsdicke ermittelt wird,

daß dieser erste Näherungswert für die zu bestimmende Beschichtungsdicke von dem gemessenen Außendurchmesser subtrahiert und damit ein verbesserter Näherungswert für den unbekannten Innendurchmesser erhalten wird, und

daß diese die beiden Verknüpfungsregeln verwendenden Verfahrensschritte mit den jeweils verbesserten Näherungswerten so lange wiederholt werden, bis zwischen aufeinanderfolgend erhaltenen verbesserten Näherungswerten für die Innendurchmesser eine vorgegebene Differenz unterschritten wird.

In vielen Fällen ist es möglich, auf relativ einfache Art physikalische Gesetzmäßigkeiten von der Platten: auf die Zylindergeometrie zu übertrsgen. Dies läßt sich auch bei Rückstreu- oder Röntgenfluoreszenzmessungen durchführen, wenn der Krümmungsrsdius des Zylinders relativ groß ist und die Durchmesser des auffallenden und des reflektierten oder angeregten Strahlenbündels im Verhältnis dazu klein sind. Bei dem vorliegenden Verfahren wären jedoch äußerst aufwendige Rechenoperationen notwendig, wobei überhaupt nicht geklärt ist, ob diese Übertragung überhaupt möglich ist. Denn aus Intensitätsgründen kann die Kollimatoröffnung für den auffallenden Strshl in der Praxis nicht kleiner als 1 mm gemacht werden, während die Öffnungen zu den Detektoren aus den gleichen Gründen sogar 4 mm betragen. Die kleinsten Durchmesser von Dränten, deren Beschichtungsstärke noch nach dem Verfahren ermittelt werden kann, betragen aber 0,5 mm, sind also kleiner als die Strahldurchmesser. Die ebenen Flächen sind aber immer wesentlich größer sls die Strahldurchmesser. Außerdem ist die Dicke des Essismaterials meistens so groß, daß für die verwendete Strahlungsart die Sättigungsrückstreuung erreicht wird. Wenn dies nicht der Fall ist, ksnn man leicht durch technische Kunstgriffe diesen Fall herstellen, etwa, daß man dss Meßgut an der Meßstelle über eine genügend dicke Platte führt, die aus dem gleichen Msterisl wie das Basismaterial besteht. Die von einem Detektor gemessene rückgestreute oder angeregte Strahlung ist also eindeutig nur eine Funktion der Schichtdicke. Im vorliegenden Verfahren ist jedoch aus den oben angeführten Gründen der Meßwert sowohl eine Funktion der zu bestimmenden Schichtdicke als auch eine des unbekannten Durchmessers des blanken Drahtes. Es handelt sich also um ein Problem, das bei Rückstreu- oder Röntgenfluoreszenzmessungen an ebenen oder schwsch gekrümmten Flächen nicht auftritt und deshalb auch in den zum Stand der Technik zählenden Druckschriften bzw. in der Fachliteratur nicht aufscheint.

Es war im vorliegenden Fall überraschend, dsß die Vernachlässigung der Unterschiede zwischen den für die einzelnen Verhältnisse der Strahlungsintensitäten (Parameter ist der Rohrdurchmesser) gegenüber der Beschichtungsdicke erhaltenen Kurven den Erhalt von Meßwerten zuläßt, die ausreichend genau sind, so daß das erfindungsgemäße Verfahren in der Praxis bestens einsetzbar ist.

Eine weitere vorteilhafte Abwandlung des erfindungsgemäßen Verfahrens besteht darin, daß zur zusätzlichen Ermittlung der Exzentrizität der Beschichtung bzw. des Msximums und des Minimums der Beschichtungsdicke an mehreren Stellen des Umfanges des beschichteten Drshtes oder Rohres, insbesondere an vier jeweils um 90° versetzten Stellen des Umfanges, gleichzeitig oder hintereinander die Bestimmung der Schichtdicken erfolgt und unter Berücksichtigung der letzten ermittelten verbesserten Näherungswerte für den Innendurchmesser die Exzentrizität bzw. die Maxima und Minima ermittelt werden. Die Maxima und Minima können mittels eines Auswertegerätes und erforderlichenflls in den gewünschten Dimensionseinheiten berechnet und erforderlichenfalls (z.B. mittels Schreiber, Drucker, etc.) registriert werden.

Eine weitere vorteilhafte Abwandlung des erfindungsgemäßen Verfahrens, die sich insbesondere für die routinemäßige und/oder automstische Prozeßkontrolle und/oder Prozeßsteuerung eignet, besteht darin, daß der beschichtete Draht oder dss beschichtete Rohr während des Meßvorganges an der Meßvorrichtung vorbeibewegt wird, daß die jeweiligen Beschichtungsdicken bzw. Maxima und/oder Minime berechnet und erforderlichenfalls registriert und mit vorgegebenen Grenzwerten verglichen werden und daß die aus den Meßwerten berechneten Werte der Schichtdicken bzw. deren Msxima bzw. deren Minima einer Einrichtung zur Prozeßkontrolle und/oder Prozeßsteuerung zugeleitet werden.

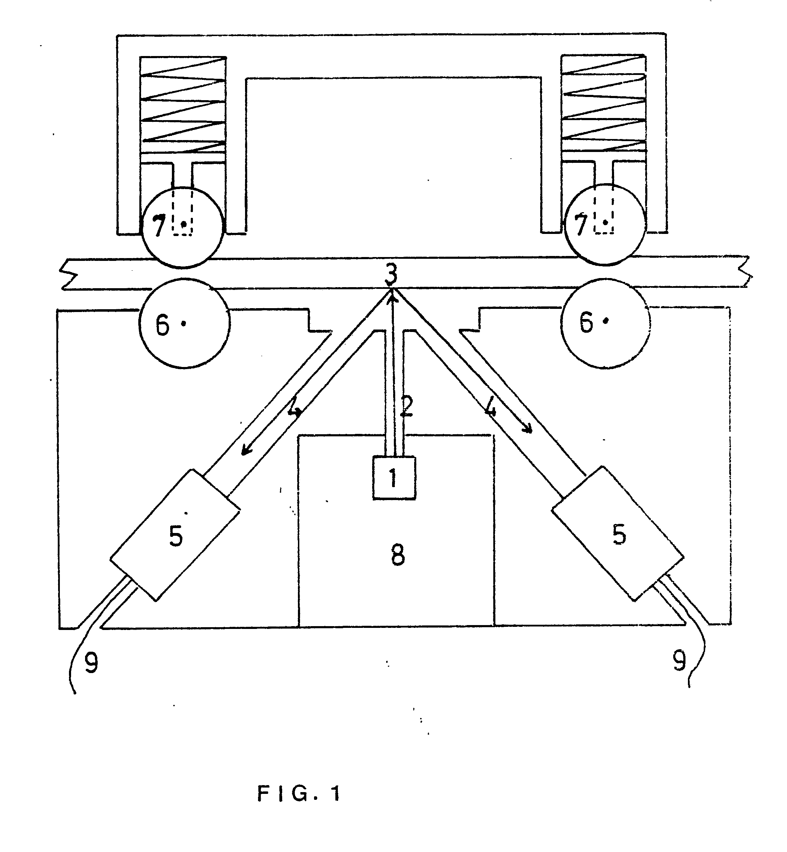

Das erfindungsgemäße Verfahren wird anhand des folgenden Beispieles näher erläutert. Fig. 1 zeigt die Meßanordnung. Die von der Strahlenquelle (1) ausgehende radioaktive Strahlung (2) wird von dem zu messenden beschichteten Draht oder Rohr (3) teilweise reflektiert (4) und in zwei geeigneten Detektoren (5) gemessen. Zwei Führungsrollen (6) sorgen für die Einhaltung einer konstanten Geometrie. In diese Führungsrollen wird der Draht oder das Rohr mittels zweier Anpreßrollen (7) gezwungen. Eine Bleiabschirmung (8) verhindert, daß direkte Strahlung von der Strahlenquelle (1) zu den Detektoren (5) gelangen kann. Außerdem wird durch sie die str ahlenschutzbedingte Abschirmmung der Strahlung nach außen hin gewährleistet. Zwei Kabel (9) dienen einerseits für die notwendige Spannungsversorgung der Detektoren (5), anderseits werden die in den Detektoren (5) gemessenen Rückstreuzählraten durch sie zu den elektronischen Registrier- und Auswerteeinheiten geführt. Der Meßkopf ist sowohl für den stationären Betrieb (Messung von Einzelproben) als auch für eine on-line-Messung nach dem Beschichtungsvorgang oder während des Ziehens geeignet. Die Auswertung der Messungen und die Berechnung der Schichtdicke erfolgt nach zwei empirisch gefundenen Gleichungen. Es ist

$$Z/Z_0 = a \exp(-b\,d) \quad (1)$$

wobei Z die gemessene Rückstreuzählrate ist, $Z_0$ die durch den Draht- oder Rohrkern hervorgerufene Rückstreuung, d die Schichtdicke und a und b zwei Konstanten, die sich im wesentlichen aus der Geometrie ergeben. Zwischen dem Wert $Z_0$ und dem Durchmesser $\Phi_0$ des Draht- oder Rohrkerns besteht der Zusammenhang

$$Z_0 = a_1 + b_1 \, lu \, \emptyset_0 \quad (2)$$

mit $a_1$ und $b_1$ als wieder geometrieabhängige konstanten. Die Konstanten ($a\ b\ a_1\ b_1$) werden für die jeweilige Meßanordnung, Proben- und Materialart anhand von Kalibriermessungen bestimmt, wobei Rückstreumessungen an blanken Drähten oder Rohren bekannter Dimensionen für die Gleichung 2, und Rückstreumessungen an beschichteten Drähten oder Rohren mit bekannten Beschichtungsdicken und Drahtbzw. Rohrdimensionen für Gleichung 1 her angezogen werden. Da jedoch $\emptyset_0$ speziell bei gezogenen Drähten oder Rohren unbekannt ist und über die Läge der Meßprobe stufenlos variiert, wurde folgendes Iterationsverfahren entwickelt: Mit dem auf andere Art, etwa optisch oder mechanisch z.B. durch Messung des Abstandes der Führungs-(6) und Anpressrollen (7), bestimmten Gesamtdurchmesser $\emptyset_g$ des (beschichteten) Drahtes oder Rohres wird mit Gleichung (2) ein $Z_{01}$ berechnet

$$Z_{01} = a_1 + b_1 \, lu \, \emptyset_g$$

Mit diesem $Z_{01}$ und der gemessenen Zählrate Z kann dann mit Gleichung (1) ein $d_1$ berechnet werden

$$\emptyset_1 = lu\,(Z/aZ_{01})/b$$

Daraus ergibt sich eine erste Näherung $\emptyset_{01}$ für den unbekannten Durchmesser $\emptyset_0$ des Draht- oder Rohrkerns.

$$\emptyset_{01} = \emptyset_g - 2d_1$$

Mit diesem werden die Rechenoperationen erneut durchgeführt, man erhält ein $Z_{02}$, dann ein $d_2$ und schließlich ein $\emptyset_{02}$. Das Ganze wird so lange fortgeführt, bis

$$\emptyset_{oi} \doteq \emptyset_{oi-1} = \emptyset_0$$

wobei der Grad der Übereinstimmung vorgewählt werden kann. Danach kann mit den Gleichungen (3) und (4) die Schichtdicke d ermittelt werden. Zur Bestimmung der Exzentrizität bzw. des Maximums $d_{max}$ und des Minimums $d_{min}$ der Schichtdicken müssen die Messungen und Berechnungen an mehreren Stellen des Umfanges durchgeführt werden. Wenn beispielsweise die Messungen jeweils um 90° versetzt wird, ergibt sich eine besonders einfache geometrische Berechnungsmöglichkeit. Danach ist

$$\emptyset = ((d_4-d_2)^2 + (\emptyset_g-d_1-d_3)^2)^{1/2} \quad (7)$$

bzw.

$$\emptyset = ((d_3-d_1)^2 + (\emptyset_g-d_2-d_4)^2)^{1/2} \quad (8)$$

wenn $d_1$, $d_2$, $d_3$ und $d_4$ die Schichtdicken sind. Die gesuchten Maximal- und Minimalwerte erhält man aus den Gleichungen

$$dmax = 1/2\,(\emptyset_g - \emptyset_0 + ((d_4-d_2)^2 + (d_3-d_1)^2)^{1/2}) \quad (9)$$
$$dmin = 1/2\,(\emptyset_g - \emptyset_0 - ((d_4-d_2)^2 + (d_3-d_1)^2)^{1/2}) \quad (10)$$

Die Exzentrizität, das heißt die Verschiebung der Mittelpunkte beider Kreise, wird durch die rechtwinkelig zueinander stehenden Größen x und y angegeben.

$$x = (d_4-d_2)/2 \quad (11)$$
$$y = (d_3-d_1)/2 \quad (12)$$

## Patentansprüche

1. Verfahren zur berührungslosen Messung der Beschichtungsdicke von beschichteten Drähten oder Rohren mit unbekanntem Kerndurchmesser mittels einer Rückstreu- bzw. Röntgenfluoreszenzanalyse, wobei zumindestens an einer Meßstelle die rückgestreute bzw. in dem beschichteten Draht bzw. Rohr induzierte Strahlung gemessen wird, dadurch gekennzeichnet,

daß für den Bereich der zu untersuchenden Draht- bzw. Rohrdicken und Beschichtungsdicken sowie für die jeweils eingesetzten Materialien mit unbeschichteten Drähten bzw. Rohren bekannten Durchmessers eine erste Verknüpfungsregel zwischen der gemessenen Strahlungsintensität und dem Durchmesser der unbeschichteten Drähte bzw. Rohre ermittelt wird,

daß für diesen Bereich mit beschichteten Drähten bzw. Rohren unterschiedlicher und bekannter Beschichtungsdicken und bekannter Kerndurchmesser eine zweite Verknüpfungsregel zwischen dem Verhältnis der an beschichteten und der an unbeschichteten Drähten bzw. Rohren gemessenen Strahlungsintensitäten und der bekannten Beschichtungsdicke ermittelt wird, daß für jede Meßstelle der Außendurchmesser des hinsichtlich seiner Beschichtungsdicke zu untersuchenden Drahtes bzw. Rohres mittels einer mechanischen, optischen oder strahlungsmeßtechnischen Meßmethode gemessen wird,

daß mittels der ersten Verknüpfungsregel durch Einsetzen des gemessenen Außendurchmessers als ersten Näherungswert für den unbekannten Innendurchmesser ein erster Näherungswert für den theoretischen Meßwert für die Strahlungsintensität des unbeschichteten Drahtes bzw. Rohres ermittelt wird,

daß ferner das Verhältnis zwischen dem tatsächlich an der Probe gemessenen Wert der Strahlungsintensität und dem gemäß der ersten Verknüpfungsregel ermittelten theoretischen Meßwert ermittelt wird und mit diesem Verhältnis mittels der zweiten Verknüpfungsregel ein erster Näherungswert für die zu bestimmende Beschichtungsdicke ermittelt wird,

daß dieser erste Näherungswert für die zu bestimmende Beschichtungsdicke von dem gemessenen Außendurchmesser subtrahiert und damit ein verbesserter Näherungswert für den unbekannten Innendurchmesser erhalten wird, und

daß diese die beiden Verknüpfungsregeln verwendenden Verfahrensschritte mit den jeweils verbesserten Näherungswerten so lange wiederholt werden, bis zwischen aufeinanderfolgend erhaltenen verbesserten Näherungswerten für die Innendurchmesser eine vorgegebene Differenz unterschritten wird.

2. Verfahren nach Anspruch 1,
dadurch gekennzeichnet,
daß zur zusätzlichen Ermittlung der Exzentrizität der Beschichtung bzw. des Maximums und des Minimums der Beschichtungsdicke an mehreren Stellen des Umfanges des beschichteten Drahtes oder Rohres, insbesondere an vier jeweils um 90° versetzten Stellen des Umfanges, gleichzeitig oder hintereinander die Bestimmung der Schichtdicken erfolgt und unter Berücksichtigung der letzten ermittelten verbesserten Näherungswerte für den Innendurchmesser die Exzentrizität bzw. die Maxima und Minima ermittelt werden.

3. Verfahren nach einem der Ansprüche 1 oder 2, dadurch gekennzeichnet,
daß der beschichtete Draht oder das beschichtete Rohr während des Meßvorganges an der Meßvorrichtung vorbeibewegt wird,
daß die jeweiligen Beschichtungsdicken bzw. Maxima und/oder Minima berechnet und erforderlichenfalls registriert und mit vorgegebenen Grenzwerten verglichen werden und
daß die aus den Meßwerten berechneten Werte der Schichtdicken bzw. deren Maxima bzw. deren Minima einer Einrichtung zur Prozeßkontrolle und/oder Prozeßsteuerung zugeleitet werden.

**Claims**

1. A method of measuring the coating thickness of clad wires or pipes of unknown core diameter without contacting the object measured by means of backscatter or X-ray fluorescent analysis, with the backscatter radiation and/or the radiation induced in the coated wire or pipe being measured at least at one measuring point, in which

a) for the range of wire or pipe thicknesses and coating thicknesses to be measured as well as the materials used a first connective operation between the measured radi ation intensity and the diameter of the uncoated wires or pipes is established on the basis of uncoated wires or pipes;

b) for this range a second connective operation between the ratio of radiation intensities measured in coated and uncoated wires or pipes and the known coating thicknesses is established on the basis of coated wires or pipes of different and known coating thicknesses and known core diameters;

c) for each measuring point the external diameter of the wire or pipe to be examined with regard to its coating thickness is measured by means of a mechanical, optical or radiometric method;

d) by means of the first connective operation, by entering the measured external diameter as a first approximation of the unknown internal diameter, a first approximation of the theoretical measured value of the radiation intensity of the uncoated wire or pipe is obtained;

e) moreover, the ratio between the radiation intensity actually measured at the sample and the theoretical value determined according to the first connective operation is established, an a first approximation of the coating thickness to be determined is obtained on the basis of this ratio by means of the second connective operation;

f) this first approximation of the coating thickness to be determined is subtracted from the measured external diameter and an improved approximati on of the unknown internal diameter is thus obtained,
and in which

g) the process steps performing the two connective operations are repeated with the improved approximations thus obtained until the difference between two consecutive improved approximations of the internal diameter remains below a given value.

2. A method according to Claim 1,
in which
for the additional determination of the excentricity of the coating and/or the maximum and minimum coating thicknesses at several points of the circumference of the coated wire or pipe, in particular at four points around the circumference at 90° from each other, the coating thicknesses are determined either simultaneously or consecutively and the excentricity and/or maximum and minimum values are established on the basis of the last improved approximation.

3. A method according to Claim 1 or 2, in which

a) the coated wire or the coated pipe moves past the measuring device during the measuring process;

b) the coating thicknesses and/or maximum and minimum values are calculated and, if required, recorded and compared with the given limit values;

and in which

c) the coating thickness and/or its maximum and minimum values calculated on the basis of the measured values are transmitted to a process control unit.

**Revendications**

1. Méthode de mesure sans contact, par analyse de la rétrodiffusion ou de la fluorescence X, de l'épaiueur de l'enduit de fils ou de tuyaux enveloppés, pour lesquels on ne connaît pas le diamètre du fil ou du tuyau support, selon laquelle on mesure au moins en un joint le rayonnement rétrodiffusé ou induit dans le fil ou le tube enduit, caractérisée en ce que:

on établit pour le domaine des épaisseurs de fils ou de tuyaux et des épaisseurs d'enduit recherchées ainsi que pour les matériaux utilisés selon le cas, à partir de fils ou de tuyaux non enveloppés de diamètres connus, une première règle de relation entre l'intensité du rayonnement mesuré et le diamètre des fils ou des tuyaux non enveloppés,

on établit pour ce domaine, à partir de fils ou de tuyaux enveloppés avec différentes épaisseurs d'enduits connues et de diamètres de base connus, une seconde règle de relation entre le rapport des intensités de rayonnement mesurées sur les fils ou les tuyaux enveloppés et sur les tuyaux non enveloppés et l'épaisseur de l'enduit connue,

on mesure en chaque point de mesure, à l'aide d'une méthode de mesure mécanique, optique ou radiométrique, le diamètre extérieur du fil ou du tuyau dont on veut connaître l'épaisseur de l'enduit,

on calcule une première valeur approchée pour la valeur théorique de l'intensité de rayonnement du fil ou du tuyau non enveloppé, en appliquant la première règle de relation et en utilisant le diamètre extérieur mesuré comme première valeur approchée pour le diamètre intérieur inconnu, on calcule alors le rapport entre la valeur de l'intensité de rayonnement effectivement mesurée sur l'échantillon et la valeur théorique obtenue à partir de la première règle de relation et on utilise ce rapport pour calculer en appliquant la seconde règle de relation une première valeur approchée pour l'épaisseur de l'enduit cherchée,

on soustrait cette première valeur approchée de l'épaisseur de l'enduit cherchée du diamètre extérieur mesuré, ce qui permet d'obtenir une valeur approchée améliorée pour le diamètre intérieur inconnu et l'on répète ces pas ditération utilisant les deux règles de relation avec des valeurs approchées améliorées au fur et à mesure, jusqu'à ce que la différence entre deux valeurs approchées améliorées obtenues successivement pour le diamètre intérieur soit inférieure à une différence préétablie.

2. Méthode selon la revendication 1, caractérisée en ce que:

pour déterminer en outre l'excentricité de l'enduit ou son épaisseur maximum et minimum en plusieurs points de la circonférence du fil ou du tuyau enveloppé, en particulier en quatre points de la circonférence distants de 90°, on détermine simultanément ou successivement les épaisseurs de l'enduit et on détermine l'excentricité ou l'épaisseur maximum et l'épaisseur minimum en utilisant les dernières valeurs approchées améliorées obtenues pour le diamètre intérieur.

3. Méthode selon une des revendications 1 ou 2 caractérisé en ce que:

le fil enveloppé ou le tuyau enveloppé se déplace le long du dispositif de mesure pendant le processus de mesure,

les épaisseurs de l'enduit en différents points ou les épaisseurs maxima et minima sont calculées et le cas échéant enregistrées et comparées avec des valeurs limites pré-établies

et les valeurs calculées pour l'épaisseur de la couche ou pour les épaisseurs maxima et minima à partir des valeurs mesurées sont transmises à un dispositif de contrôle et/ou de commande des processus industriels.

FIG. 1